# EUROPEAN PATENT SPECIFICATION

(11) **EP 2 546 070 B1**
(45) Date of publication and mention of the grant of the patent: **11.09.2019**
(21) Application number: 11752882.8
(22) Date of filing: 22.02.2011
(51) Int. Cl.: B81B 7/04, G02B 3/08, B42D 25/29, G02B 5/18

(54) **MICRO-OPTICAL SYSTEM FOR FORMING VISUAL IMAGES**
MIKROOPTISCHES SYSTEM ZUR FORMUNG VISUELLER BILDER
SYSTÈME MICRO-OPTIQUE DE FORMATIONS D'IMAGES VISUELLES

(30) Priority: 09.03.2010 EA 201000535
(43) Date of publication of application: 16.01.2013
(73) Proprietor: Computer Holography Center, Moscow 124460 (RU)
(72) Inventor: GONCHARSKIY, Anton Alexandrovich, Moscow 117321 (RU); GONCHARSKIY, Alexander Vladimirovich, Moscow 117321 (RU); DURLEVICH, Svyatoslav Radomirovich, Moscow 119571 (RU)
(74) Representative: Zaboliene, Reda
(86) International application number: PCT/EA2011/000001
(87) International publication number: WO 2011/110185

(56) References cited:
- WO-A2-2006/025980
- JP-A- 2006 159 667
- RU-A- 2007 132 769
- US-A- 4 130 346
- US-A1- 2004 196 516
- US-A1- 2004 247 874
- US-A1- 2005 095 407
- US-A1- 2006 056 065
- US-A1- 2008 030 990
- US-A1- 2008 106 091
- US-A1- 2009 153 967
- US-A1- 2009 153 974
- RUSINOV M.M.: 'Kompozitsiya opticheskikh sistem' LENINGRAD, MASHINOSTROENIE 1989, page 336, XP008168942

## Description

### Field of the invention

The micro-optical system for the formation of visual images claimed as an invention is primarily a device used to certify the authenticity of products, which can be used to efficiently protect bank notes, securities, documents, plastic cards, bank charge cards; documentary, identification, and control stamps, and various consumer goods against counterfeit.

### Background

Currently, to protect manufactured goods against counterfeit, they are fitted with various difficult-to-reproduce features. The latter may have the form of watermarks, diving threads, holograms, or embedded liquid-crystal optical elements capable of changing the polarization of incident light. Possible types of protection features also include latent images - marks that cannot be seen directly under normal conditions, but become visible under polarized light. A possible example of such a security feature is holographic mark used to protect documents that has the form of a carrier film covered by removable coating, metal foil serving as the base for the element with changeable optical form, and a glue layer sensitive to heating and/or pressure to connect with the protected document (US6124970, GB2328180 class B 42D 15/10). Other technologies have also been developed for the creation of various hidden images, which provide good protection against counterfeit (Goncharsky A.A., "Computer Optics & Computer Holography", Moscow University Press, 2004, ISBN 5-211-04903-9). The drawback of these methods is that they require special devices without which it is impossible to perform authenticity control.

The development of security features for visual control is currently one of the main problems in the authenticity control of documents, bank notes, and brands. These features must meet rather simple requirements:
1. Security features must allow reliable visual control depending little on the conditions of illumination.
2. Security features should be well protected against counterfeit or imitation.
3. Security features should allow mass production.

The well-known optical system of the formation of images (US Patent No. 7,468,842 or US Patent No.7,333,268), which is also referred to as the motion system, is the closest one to the claimed invention in terms of the set of security features provided. This system, which was described in US patents, includes a layer of micro-images and a layer of focusing elements made in the form of lenticular lenses (micro-lenses). Such a system makes it possible to create the effect of image motion when the light incidence angle changes, and this effect can be evidenced by the motion of the generated image when the object is tilted with respect to the source of light. This allows an ordinary consumer to visually establish the authenticity of the security feature. The optical "motion" system consists of several layers. The thickest of them is the layer of micro-lenses. It is at least 10 microns thick. This layer is followed by a layer of microimages, glue layers, etc. The total thickness of the security feature ranges from 30 to 40 microns. This parameter (thickness) is critical for the use of such a security feature in the form of a diving thread to protect bank notes both at the technological stage of their production and in the process of their use.

In the well-known "motion" optical system the sharpness of the image produced depends on the exact maintenance of the focal distance during the superimposition of the layers, and this may affect the sharpness of the image, the dynamical effect of motion, and creates serious technical problems during mass production of security features based on the optical systems mentioned above and restricts the domain of their application. Thus, e.g., important difficulties have to be overcome in the process of manufacturing of hot-embossing foil, which is used primarily for the protection of documents, plastic cards, and brands.

Documents US2006056065A1, US20050095407A1, JP2006159667A, US20040247874A1, RU2007132769A, US2009153967A1, US2008030990A1, WO2006025980A2 and RUSINOV M.M., "Kompozitsiya opticheskikh sistem", LENINGRAD, MASHINOSTROENIE, 1989, page 336, XP008168942 describe advantages of flat Fresnel lenses and their different applications. US20080106091A1 describes an optical element consisting of two lens layers, wherein an optical effect is produced upon overlap of the second lens layer with the first lens layer. The lenses may be diffractive lenses, are arranged regularly on a square grid or in a regular hexagonal pattern and do not intersect. However, such system is complicated and does not reduce the thickness of the element. US20090153974A1 discloses a regular arrangement of diffractive lenses of the same type, a staggered arrangement of the lenses of two types, and an arrangement of the lenses with different parameters in a random order on a substrate. However, the area of the lens intersection region is equal to zero. US4130346A discloses a lens system of intersecting axial Fresnel lenses used to increase the images located under each of the lenses (the size of each lens exceeds the size of the image), but it is not a micro-optical system having a single-layer optical element. US20040196516A1 describes an optical system comprising a surface with an area filled with a plurality of close-packed optical elements and forming a letter, symbol, etc., while the rest area of the surface (background) is filled with lenses having another focal length. However, the contrast between the image and background ensured by this system is low.

In view of the prior art, there is a need to create a system that makes it possible to easily visualize and generate the controllable effect of image motion, reduce the thickness of the feature, and expand the domain of its application.

### Disclosure of the invention (Summary of the invention)

The aim of this invention is to eliminate the drawbacks mentioned above, create a system that makes it possible to easily visualize and generate the controllable effect of image motion, reduce the thickness of the feature, and expand the domain of its application. The technical result achieved consists in easy-to-control effect of image motion, reduced thickness of the system of security images, and enhancement of the dynamical effect of motion in particular embodiments of the invention. The aim of the invention is also to make possible the use of standard highly productive technological process of the manufacturing, production, and application of security features.

The assigned task is accomplished and the desired technical result is achieved by the subject-matter of the independent claim. Further preferred embodiments are defined in the dependent claims.

### Brief description of the figures (drawings)

The essence of the invention is explained in figures. Figure 1 shows a flat lens that operates like a single concave mirror; Fig. 2 shows a flat lens that operates like a convex mirror; Fig. 3 shows a fragment of an off-axis Fresnel lens with a saddle-shaped phase function; Fig. 4 shows the image of a point-light source reflected from a flat lens and seen by the observer; Fig. 5 shows the layout chart of non-intersecting optical elements for the synthesis of the image of the number "10"; Fig.6 shows how the observer sees the image of the number "10" consisting of separate dots produced by flat optical elements; Fig. 7 shows the layout chart of intersecting flat optical elements producing the image of the number "10"; Fig. 8 shows the layout chart of the synthesis of the microrelief of two intersecting flat optical elements; Fig. 9 shows how the observer sees the image of the number "10" consisting of separate dots produced by intersecting flat optical elements; Fig. 10 demonstrates the synthesis of images using off-axis Fresnel lenses of different (concave and convex) types.

### Versions of the embodiment of the invention

### (Description of the preferred embodiment)

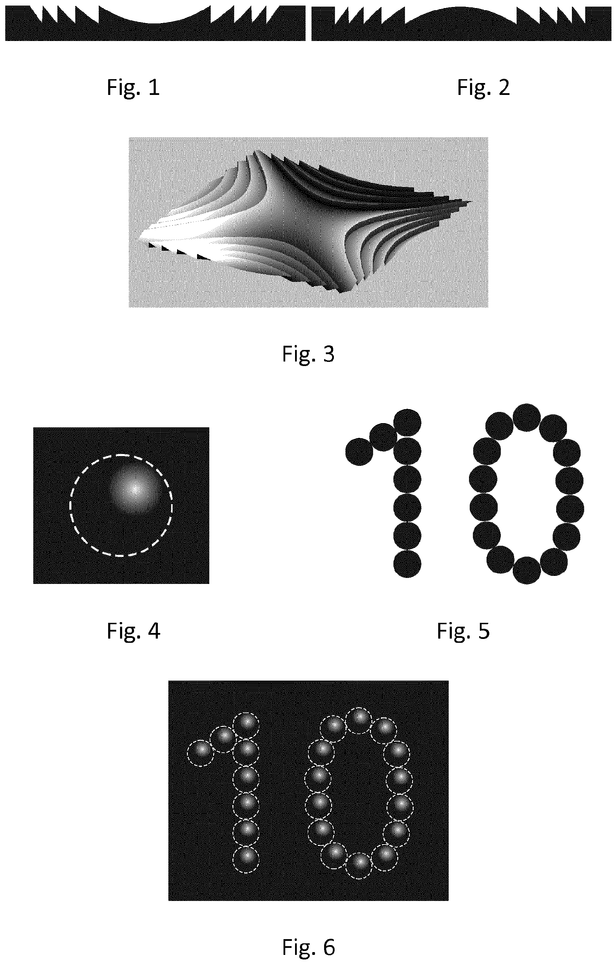

The idea of flat optics dates back to the times of Fresnel. It is well known that a flat optical element can be made that focuses a parallel light beam into a point (the so-called flat lens). Figure 1 shows the profile of the microrelief of a phase optical element - a flat Fresnel lens with a paraboloid phase function - focusing the image into a point like a whole concave mirror with a shape of a paraboloid. The microrelief in Fig. 1 has a height of λ/2, consists of paraboloid fragments, and operates in reflective mode for monochromatic light with a wavelength of λ like a whole parabolic mirror (Goncharsky A.A., "Computer Optics & Computer Holography", Moscow University Press, 2004, ISBN 5-211-04903-9). Figure 2 shows the profile of the microrelief of a flat Fresnel lens with a shape of a convex paraboloid. Any fragment cut out of a flat Fresnel lens is called an off-axis Fresnel lens.

The micro-optical system, which is the subject of this invention, is meant to synthesize visual images in the visible part of the spectrum (from 0.38 to 0.74 microns). The micro-optical system consists of off-axis Fresnel lenses with a depth of micrirelief corresponding to some fixed wavelength, e.g., λ = 0.56 microns. Hence for the light with a wavelength equal to 0.56 microns the off-axis Fresnel lenses synthesize the image with maximum efficiency. When optical emission with a different wavelength is incident on such a Fresnel lens, the same image is produced, but with a lower efficiency. Thus when optical emission spanning the entire visible part of the spectrum is incident onto the micro-optical system, the latter produces a visual image consisting of single bright dots. Thus, e.g., when white light is incident onto the micro-optical system, an image forms that consists of separate bright white dots.

The potential of flat optics is not limited to flat lenses. A flat phase element can be made that operates in reflective mode like a mirror with the smooth surface of any given shape (Goncharsky A.A., "Computer Optics & Computer Holography", Moscow University Press, 2004, ISBN 5-211-04903-9). Figure 3 shows a fragment of the microrelief - a flat Fresnel lens with a saddle-shaped phase function. When observed, the reflection of a point-light source in a concave parabolic mirror appears as a bright point. If the position of the light source changes (or the position of the concave mirror changes while that of the light source remains fixed), the observer sees the image in the mirror to move. Let us now replace the concave mirror by an equivalent flat optical element. The flat element (in this case, a flat lens) operates like a whole mirror and therefore this effect can also be observed when light is reflected from a flat lens. This visual effect remains even in the case of a flat split Fresnel lens. (Goncharsky A.A., "Computer Optics & Computer Holography", Moscow University Press, 2004, ISBN 5-211-04903-9). Figure 4 shows how the observer sees the image of a light source reflected from the flat lens shown in Fig. 1. If the observer tilts this element toward him/her, the reflection of the light source (the bright point) moves down with respect to the flat lens. If the observer tilts the element away from him/her, the image moves up, if the observer tilts the element to the right, the spot moves to the right, and if the observer turns the element to the left, the spot moves to the left. Note that if the flat lens is made to imitate not a concave (Fig. 1), but a convex (see Fig. 2) mirror, then the reflection of the source moves in the direction opposite to that described in the example above. That is, when the element is tilted to the observer, the image moves up, if the element is tilted to the right, the spot moves to the left, etc. The potentialities of flat optics are much broader. If illuminated by a point-light source, a flat optical element - a Fresnel lens with a saddle-point phase function (Fig. 3) - produces the image of a point, and the image of the reflected light source moves to the left and to the right (and not up an down as in the cases described above) when the element is tilted to and from the observer, respectively, and it moves up and down if the element is tilted to the left and to the right, respectively.

Let us, by way of an example, arrange flat optical elements on a flat base so as to make an easily recognizable image, e.g., the number "10", as shown in Fig. 5. The observer sees the image of the number 10 made of bright points, each of which is the reflection of the light source by the corresponding flat optical element (Fig. 6). If the flat optical elements shown in Fig. 1 (an analog of a concave parabolic mirror) are used as base elements, then tilting such a micro-optical system to the observer results in a downward displacement of the image of the number 10 as a whole, tilting it away from the observer, in an upward displacement of the number 10, tilting it to the right, in the rightward displacement of the number, and tilting it to the left, in the leftward displacement of the number. In the general case the directions of the displacement of the synthesized images depend on the parameters of flat nonintersecting optical elements. The direction of displacement reverses if flat optical elements operate as convex mirrors (see Fig. 2), namely, when the micro-optical system is tilted to and from the observer, the image moves up and down, respectively, etc.

Flat optical elements can be computed and made so as to ensure more complex patterns of image motion. In the embodiment of the claimed invention the micro-optical system for the synthesis of security images consists of identical flat nonintersecting optical elements with a saddle-shaped phase function, which produce the specified radiation pattern of scattered light so that the image moves up and down as a whole when the base is tilted to the right or left, respectively, and, moves to the right and left when the base is tilted to and from the observer, respectively. The amplitude of the motion of each image cannot exceed the size of the flat optical element that synthesizes it. The typical sizes of flat optical focusing elements for optical security technologies range from 0.5 to 3 mm.

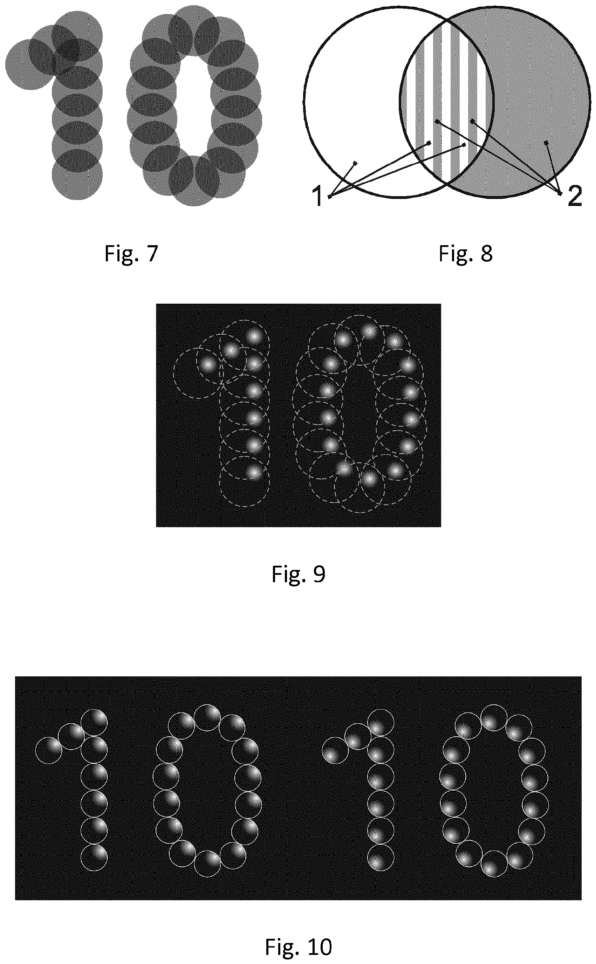

For the effect of image motion to be easy to control visually, the amplitude of image displacement should be increased as much as possible. To this end, a version of the invention is proposed, where the optical system is made of identical flat intersecting optical elements to enhance the dynamic effect of motion (Fig. 7). Figure 8 shows schematically the formation of the microrelief of two intersecting flat optical elements. The domain of intersection of element 1 and element 2 is subdivided into subdomains as shown in Fig. 8. In this case the microrelief of the first and second element forms in the odd (white vertical bands) and even bands (gray bands), respectively. The width of the partitioning bands is chosen small enough - it should be smaller than the resolution of a human eye (less than 50 microns). Thus the partition of the domain of intersection of optical elements is imperceptible for human eye and the range of displacements of the bright point for each element is equal to the diameter of this element. The use of intersecting elements allows the diameter of the elements to be made greater than that of intersecting elements. The effect of image motion becomes twice stronger when flat optical elements overlap by half their size.

When creating a security image, the image motion effect can be further amplified by using flat optical elements of several types resulting in the motion of image fragments in opposite directions (Fig. 10). The left- and right-hand images are synthesized by flat optical elements of the «concave» (Fig. 1) and «convex» (Fig. 2) type, respectively. When the position of the base changes with respect to the observer, the right- and left-hand parts of the image move in opposite directions. This feature further amplifies the effect of the motion of image fragments by a factor of two. Thus such an embodiment of the claimed micro-optical system makes it possible to create easy to control visual motion effect. The controllable effect depends on the illumination conditions and the type of the light source used only slightly and this is certainly an advantage from the viewpoint of practical application of the proposed micro-optical system of the synthesis of images. Note that the claimed micro-optical system can be used to create the effect of image motion both in the reflective and transmission mode, which can be used as a security feature to protect bank notes, securities, plastic cards, bank charge cards, documentary, identification, and control stamps, and various consumer goods against counterfeit.

In the claimed invention the depth of the microrelief that synthesizes the image ranges from 0.1 to 0.3 microns (and not 10 or more microns as in the case of the "motion" system (US Patent No. 7 468 842 or US Patent No. 7 333 268)), and thereby makes it possible to produce holographic threads much thinner than 30-40 microns.

The claimed invention allows mass production of optical elements, because they can be made using standard technology of hologram replication including replication in the form of hot-embossing foil. In practice the process of the production of a flat optical element includes the following stages: computation of the parameters and structure of the microrelief of flat optical elements that synthesize the security images, synthesis of the computed microrelief on a flat base using electron-beam lithography (or optical technology of the formation of microrelief). This part of the technology of the synthesis of mirooptical systems is complicated, knowledge intensive, and guarantees protection against counterfeit.

This is followed by the standard technology of mass replication of holograms, namely, electrotyping, rolling, application of glue layers, cutting, etc. The possibility of using standard holographic equipment allows the micro-optical security systems claimed as the invention to be made at a lower cost compared to the well-known motion systems.

### Industrial applicability

As an embodiment of the invention, flat optical elements that form the number "10" were made on a base. Optical elements were made both in the form of non-intersecting optical elements and in the form of intersecting optical elements consisting of off-axis Fresnel lenses with a paraboloid phase function, and with a saddle-shaped phase function.

Also made were optical elements that synthesize an image, these elements consisted of two types of Fresnel lenses. Flat optical elements synthesized the image of the number "10" consisting of separate points, the Fresnel lenses had the size of 1 mm. The mirorelief of flat optical elements was recorded using electron-beam lithography (electron-beam lithograph Carl Zeiss ZBA-21) on plates with electron resist. The plates with electron resist were then metalized and used to make master matrices of micro-optical systems via electrotyping. After standard holographic procedure of multiplication multiple master matrices were made, which served as originals to produce working matrices for rolling. Hot-embossing foil was made using standard equipment for rolling, and this foil was then used to produce security threads containing flat optical phase elements described above. The thickness of the holographic foil was equal to 19 microns. After embossing of the foil the thickness of the layer of micro-optical system on the protected document is equal to 3-4 microns.

When illuminated by white light from various light sources (glow lamps, fluorescent lamps, sunlight), the micro-optical systems consisting of off-axis Fresnel lenses synthesized visual images consisting of separate bright points, and the effect of motion of synthesized images was observed when the base was tilted.

To enhance the range of the effect of image motion, micro-optical systems were made that consisted of flat optical elements of two types: concave Fresnel lenses as shown in Fig. 1 and convex Fresnel lenses as shown in Fig. 2. Lenses of each type synthesized their part of the image, thereby creating the effect of simultaneous displacement of image fragments in opposite directions.

The use of intersecting optical images in such a scheme of the synthesis of images made it possible to achieve maximum effect of relative motion of image fragments, which amounted to 2 millimeters in the case of 3-millimeter large images of individual digits.

The samples produced thus demonstrated high efficiency of the invention and the possibility of its efficient use for protecting bank notes, securities, documents, plastic cards, bank charge cards, documentary, identification, or control stamps, and various consumer goods against counterfeit.

## Claims

1. A micro-optical system for the synthesis of images consisting of individual dots with kinetic effects of their motion, the micro-optical system having the form of a single-layer flat microrelief optical phase element with two types of circular off-axis Fresnel lenses, wherein the Fresnel lenses of the first type are concave Fresnel lenses, and the Fresnel lenses of the second type are convex Fresnel lenses, the Fresnel lenses having a saddle-shaped or a paraboloid phase function, the Fresnel lenses having a diameter from 0.5 to 3 mm, and wherein identical Fresnel lenses are made intersecting, wherein the domain of intersection of the microrelief of a first and second identical Fresnel lens is subdivided into subdomains which have the form of alternating odd and even bands whose width is less than 50 microns, and the microrelief of the first and second Fresnel lens forms in the odd and even bands, respectively, wherein when the micro-optical system is illuminated by a point light source and tilted with respect to the observer, the image fragments produced by the Fresnel lenses of the first and second type shift in opposite directions.

2. The micro-optical system of claim 1, **characterized in that** when the micro-optical system with the Fresnel lenses with a saddle-shaped phase function is illuminated by a point light source and tilted up/down with respect to the observer, the image fragments formed by the Fresnel lenses of the first type are shifted left/right and the image fragments formed by the Fresnel lenses of the second type are shifted right/left.

3. The micro-optical system of claim 1, **characterized in that** when the micro-optical system with the Fresnel lenses with a parabolic phase function is illuminated by a point light source and tilted up/down with respect to the observer, the image fragments formed by the Fresnel lenses of the first type are shifted up/down and the image fragments formed by the Fresnel lenses of the second type are shifted down/up.

4. The micro-optical system of any one of claims 1 to 3, **characterized in that** it is made with the possibility of partial reflection and partial transmission of light.

5. The micro-optical system of any one of claims 1 to 3, **characterized in that** it is made with the possibility of reflection of light.

6. The micro-optical system of any one of claims 1 to 3, **characterized in that** it is made with the possibility of transmission of light.

7. The micro-optical system of any one of claims 1 to 6, **characterized in that** it is made in the form of a security mark used to protect bank notes, securities, documents, plastic cards, bank charge cards, documentary, identification, or control stamps, and various consumer goods against counterfeit.

## Patentansprüche

1. Mikrooptisches System für die Synthese von Bildern, bestehend aus einzelnen Punkten mit kinetischen Effekten ihrer Bewegung, wobei das mikrooptische System die Form eines einschichtigen flachen optischen Mikrorelief-Phasenelements mit zwei Arten von kreisförmigen, außermittigen Fresnellinsen aufweist, wobei die Fresnellinsen des ersten Typs konkave Fresnellinsen sind und die Fresnellinsen des zweiten Typs konvexe Fresnellinsen sind, wobei die Fresnellinsen eine sattelförmige oder eine Paraboloid-Phasenfunktion aufweisen, die Fresnellinsen einen Durchmesser von 0,5 bis 3 mm aufweisen und wobei identische Fresnellinsen sich kreuzend hergestellt werden, wobei der Schnittbereich des Mikroreliefs einer ersten und einer zweiten identischen Fresnellinse in Unterbereiche unterteilt ist, die die Form von alternierenden ungeraden und geraden Bändern mit einer Breite von weniger als 50 Mikrometer aufweisen, und das Mikrorelief der ersten und zweiten Fresnellinse in dem ungeraden bzw. geraden Band gebildet wird, wobei, wenn das mikrooptische System von einer Punktlichtquelle beleuchtet und in Bezug auf den Beobachter geneigt wird, sich die von den Fresnellinsen des ersten und des zweiten Typs erzeugten Bildfragmente in entgegengesetzte Richtungen verschieben.

2. Mikrooptisches System nach Anspruch 1, **dadurch gekennzeichnet, dass**, wenn das mikrooptische System mit den Fresnellinsen mit einer sattelförmigen Phasenfunktion von einer Punktlichtquelle beleuchtet und gegenüber dem Beobachter nach oben/unten geneigt wird, die durch die Fresnellinsen des ersten Typs gebildeten Bildfragmente nach links/rechts verschoben werden und die durch die Fresnellinsen des zweiten Typs gebildeten Bildfragmente nach rechts/links verschoben werden.

3. Mikrooptisches System nach Anspruch 1, **dadurch gekennzeichnet, dass**, wenn das mikrooptische System mit den Fresnellinsen mit einer parabolischen Phasenfunktion von einer Punktlichtquelle beleuchtet und gegenüber dem Beobachter nach oben/unten geneigt wird, die durch die Fresnellinsen des ersten Typs gebildeten Bildfragmente nach oben/unten verschoben werden und die durch die Fresnellinsen des zweiten Typs gebildeten Bildfragmente nach unten/oben verschoben werden.

4. Mikrooptisches System nach einem der Ansprüche 1 bis 3, **dadurch gekennzeichnet, dass** es mit der Möglichkeit einer teilweisen Reflexion und teilweisen Übertragung von Licht hergestellt ist.

5. Mikrooptisches System nach einem der Ansprüche 1 bis 3, **dadurch gekennzeichnet, dass** es mit der Möglichkeit einer Reflexion von Licht hergestellt ist.

6. Mikrooptisches System nach einem der Ansprüche 1 bis 3, **dadurch gekennzeichnet, dass** es mit der Möglichkeit einer Lichtübertragung hergestellt ist.

7. Mikrooptisches System nach einem der Ansprüche 1 bis 6, **dadurch gekennzeichnet, dass** es in Form einer Sicherheitsmarkierung hergestellt ist, die verwendet wird, um Banknoten, Wertpapiere, Dokumente, Plastikkarten, Bankkarten, Dokumenten-, Identifikations- oder Kontrollstempel und verschiedenen Konsumgüter vor Fälschungen zu schützen.

## Revendications

1. Système micro-optique pour la synthèse d'images consistant en des points individuels avec des effets cinétiques de leur mouvement, le système micro-optique ayant la forme d'un élément de phase optique à microrelief plat monocouche avec deux types de lentilles de Fresnel circulaires hors axe, dans lequel les lentilles de Fresnel du premier type sont concaves et les lentilles de Fresnel du second type sont convexes, les lentilles de Fresnel ayant une fonction en selle ou en paraboloïde, les lentilles de Fresnel ayant un diamètre compris entre 0,5 et 3 mm, et dans lequel et identiques, lentilles de Fresnel se croisent, dans lequel le domaine d'intersection du microrelief d'une première et d'une seconde lentilles de Fresnel identiques étant subdivisé en sous-domaines qui ont la forme de bandes alternées paires et impaires dont la largeur est inférieure à 50 microns, et le microrelief des première et seconde lentilles de Fresnel formant respectivement des bandes paires et impaires, dans lesquelles lorsque le système micro optique est éclairé par une source lumineuse ponctuelle et basculé vis-à-vis de l'observateur, les fragments d'image formés par les lentilles de Fresnel des première et seconde directions opposées changent.

2. Système micro-optique selon la revendication 1, **caractérisé en ce que** lorsque le système micro-optique avec les lentilles de Fresnel à fonction de phase en forme de selle est éclairé par une source lumineuse ponctuelle et incliné vers le haut/bas par rapport à l'observateur, les fragments d'image formés par les lentilles de Fresnel du premier type sont décalés de gauche à droite et ceux formés par les lentilles de Fresnel du second type le sont de droite/à gauche.

3. Système micro-optique selon la revendication 1, **caractérisé en ce que** lorsque le système micro-optique avec les lentilles de Fresnel à fonction de phase parabolique est éclairé par une source lumineuse ponctuelle et incliné vers le haut/bas par rapport à l'observateur, les fragments d'image formés par les lentilles de Fresnel du premier type sont déplacés vers le haut/bas et les fragments d'image formés par les lentilles de Fresnel du second type sont déplacés vers le haut/bas.

4. Système micro-optique de l'une quelconque des revendications 1 à 3, **caractérisé en ce qu'**il est réalisé avec la possibilité de réflexion partielle et de transmission partielle de lumière.

5. Système micro-optique de l'une quelconque des revendications 1 à 3, **caractérisé en ce qu'**il est réalisé avec la possibilité de réflexion de la lumière.

6. Système micro-optique de l'une quelconque des revendications 1 à 3, **caractérisé en ce qu'**il est réalisé avec la possibilité de transmission de lumière.

7. Système micro-optique de l'une quelconque des revendications 1 à 6, **caractérisé en ce qu'**il est réalisé sous la forme d'une marque de sécurité utilisée pour protéger les billets de banque, les valeurs mobilières, les documents, les cartes plastiques, les cartes de paiement, les cachets documentaires, d'identification ou de contrôle, et divers biens de consommation contre la contrefaçon.
